# FASCICULE DE BREVET EUROPEEN

(11) **EP 2 939 782 B1**
(45) Date de publication et mention de la délivrance du brevet: **22.02.2017**
(21) Numéro de dépôt: 15305603.1
(22) Date de dépôt: 22.04.2015
(51) Int. Cl.: B23K 10/00, H05H 1/32

(54) **PROCÉDÉ ET INSTALLATION DE COUPAGE PAR PLASMA D'ARC AVEC CYCLE DE PERÇAGE AMÉLIORÉ**
VERFAHREN UND ANLAGE ZUM LICHTBOGEN-PLASMASCHNEIDEN MIT VERBESSERTEM BOHRZYKLUS
PLASMA ARC-CUTTING METHOD AND FACILITY WITH IMPROVED DRILLING CYCLE

(30) Priorité: 02.05.2014 FR 1454019
(43) Date de publication de la demande: 04.11.2015
(73) Titulaire: AIR LIQUIDE WELDING FRANCE, 75007 Paris (FR)
(72) Inventeur: Berthelot, Vincent, 60700 Pont-Sainte-Maxence (FR); Keith, Rémi, 95310 SAINT OUEN L'AUMONE (FR); Renault, Thierry, 95640 MARINES (FR)
(74) Mandataire: Debecker, Isabelle Virginie

(56) Documents cités:
- JP-A- S 632 562
- JP-A- S5 945 079
- MORIMOTO S ET AL: "Plasma cutting method involves moving plasma torch to horizontal direction along process line following cutting element, and forming continuous cutting channel along outer periphery of cutting component", WPI / THOMSON,, vol. 2013, no. 68, 3 octobre 2013 (2013-10-03), XP002735131,

## Description

L'invention concerne un procédé de coupage par plasma d'arc d'une pièce métallique avec amélioration du cycle de perçage de la pièce à couper, ainsi qu'une installation de mise en oeuvre dudit procédé, et ce conformément au préambule des revendications 1 et 14 respectivement (voir, par exemple, JP2013/202676 A).

Une opération de coupage par plasma d'arc d'une pièce métallique comprend habituellement une phase d'amorçage, c'est-à-dire d'allumage de l'arc électrique dans la torche, une phase de transfert de l'arc de la torche à la pièce métallique, une phase de perçage et une phase de coupage de la pièce au moyen d'un jet de plasma d'arc, et une phase d'arrêt de la torche.

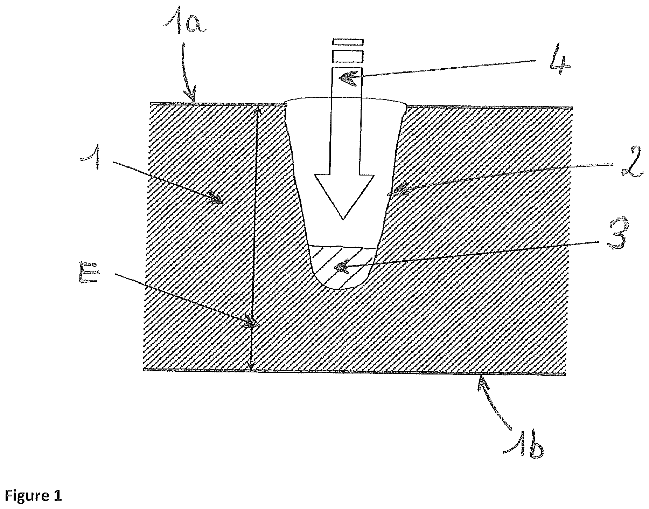

La phase de perçage, illustrée sur la Figure 1 correspond à la phase pendant laquelle le matériau constitutif de la pièce 1 à couper est progressivement fondu par le plasma d'arc le long de l'épaisseur de ladite pièce 1, jusqu'à ce que la cavité 2 formée depuis la surface supérieure 1a de la pièce débouche au niveau de la surface inférieure 1b. Débute ensuite la phase de coupage, pendant laquelle une saignée de découpe est créée à travers l'épaisseur de la pièce 1 à partir de la cavité 2 débouchante ou quasi-débouchante créée en phase de perçage.

Au cours du perçage, la torche (non illustrée) et les consommables qui la composent sont positionnés au-dessus de la cavité 2 et sont généralement soumis à des remontées de gaz chaud et de métal en fusion. Ceci est dû au fait que la cavité 2 n'est pas encore débouchante : le jet de gaz chaud (flèche 4) « rebondit » au fond de la cavité 2 et le métal fondu 3 remonte vers le haut de la cavité 2.

Plus l'épaisseur de la pièce augmente, plus la quantité de métal fondu projeté vers la torche augmente. En outre, les tôles épaisses sont plus difficiles à percer car, du fait de la profondeur plus importante de la cavité 2, le jet de plasma d'arc (flèche 4) exerce une pression plus homogène sur la surface du bain de métal en fusion 3. Le bain de métal fondu 3 stagne alors au fond de la cavité 2. Cette couche de métal fondu 3 au fond de la cavité 2 empêche le perçage de se poursuivre.

Plusieurs solutions ont été proposées pour tenter d'améliorer le cycle de perçage d'une pièce par plasma d'arc.

Une première possibilité consiste à protéger la torche des projections produites lors du perçage. Ainsi, il est connu respectivement des documents US 5,120,930 et JP 63-002562 de dévier les projections de métal fondu par des jets de gaz annulaires provenant de la torche de coupage ou par un jet de gaz distribué par un système externe à la torche.

On connaît aussi du document US 5,396,043 un procédé mettant en oeuvre une surpression de gaz au moment du perçage.

Par ailleurs, le document US 8,212,173 enseigne de refroidir l'extrémité basse de la torche.

Quant au document JP 3652350, il enseigne d'éloigner la torche de la surface supérieure de la pièce une fois l'arc transféré.

Enfin, le document US 8,168,916 A enseigne d'opérer une rampe de montée en courant non linéaire au cours du perçage.Ces différentes solutions réduisent l'impact négatif des projections de métal fondu se produisant au cours du perçage. Toutefois, elles ne permettent pas d'augmenter les épaisseurs de pièces pouvant être percées, le perçage restant limité à des épaisseurs de l'ordre de 50 mm pour une intensité de l'ordre de 600 A pour des pièces en acier inoxydable et 50 mm pour une intensité de l'ordre de 400 A pour des pièces en acier au carbone. En outre, ces solutions conduisent à une complexification de la conception de la torche et de l'installation de coupage. Enfin, la solution consistant à moduler le courant d'arc peut entraîner une instabilité de l'arc électrique, ce qui augmente les risques d'usure des composants de la torche.

Une autre possibilité, divulguée dans l'article de V. A. Nemchinsky et al, « Piercing of a metal slab by a plasma jet during plasma arc cutting », J. Phys. D : Appl. Phys., 1999, consiste à percer la pièce en faisant avancer la torche au-dessus de la surface supérieure de la pièce à vitesse très réduite. Toutefois, du fait de la faible vitesse d'avance lors du perçage, cette solution nécessite des distances de perçage importantes, typiquement au moins 40 mm, ce qui entraîne une quantité de matière perdue importante, et ce d'autant plus que l'épaisseur de la pièce augmente.

On connaît par ailleurs du document JP 2013-202676 A un procédé de perçage d'une pièce au cours duquel on déplace horizontalement la torche tout en l'éloignant de la pièce. La torche est ensuite déplacée horizontalement, sa hauteur étant maintenue constante par rapport à la surface supérieure de la pièce. Enfin, la torche est déplacée verticalement en étant rapprochée de la surface supérieure de la pièce, ceci à position horizontale fixe. Les mouvements de descente et de déplacement horizontal de la torche sont donc totalement décorrélés.

Or, il s'avère que ce procédé de perçage n'est pas satisfaisant pour percer des pièces ayant une forte épaisseur, c'est-à-dire une épaisseur supérieure ou égale à 40 mm, voire supérieure ou égale à 50 mm. En effet, la profondeur de la cavité creusée est dans ce cas trop importante et le métal fondu est inévitablement projeté vers la torche lors de la finalisation du perçage.

Le problème qui se pose est dès lors de pallier tout ou partie des inconvénients mentionnés ci-dessus, notamment de proposer un procédé de coupage automatique par plasma d'arc d'une pièce métallique dont le cycle de perçage est amélioré de manière à percer des épaisseurs de pièces plus importantes que dans l'art antérieur, et ce en minimisant les projections de métal fondu vers la torche de coupage ainsi que la quantité de matière de pièce perdue suite à la réalisation du perçage.

La solution est alors un procédé de coupage d'une pièce métallique mettant en oeuvre une torche de coupage par plasma d'arc alimentée en gaz d'assistance tel que défini dans la revendication 1.

Selon le cas, le procédé de l'invention peut comprendre l'une ou plusieurs des caractéristiques techniques suivantes :
- le rapprochement de l'extrémité basse de la torche débute dès la réduction de la vitesse de déplacement de la torche de la première vitesse V₁ à la deuxième vitesse V₂.
- à l'étape i), la torche est déplacée à une première vitesse V₁ supérieure ou égale à 110 % de la vitesse de coupe V_{c}, de préférence supérieure ou égale à 120 % de la vitesse de coupe V_{c}.
- à l'étape i), la torche est déplacée à une première vitesse V₁ supérieure ou égale à 20 cm/min.
- à l'étape i), la torche est déplacée à une première vitesse V₁ inférieure ou égale à 160 % de la vitesse de coupe V_{c}.
- à l'étape ii), la torche est déplacée à une deuxième vitesse V₂ inférieure ou égale à 5 cm/min.
- à l'étape i), la torche est déplacée sur une première distance D₁ inférieure à 50 mm, de préférence inférieure à 30 mm, de préférence encore comprise entre 15 et 25 mm.
- à l'étape ii), la torche est déplacée sur une deuxième distance (D₂) inférieure à 30 mm, de préférence inférieure à 20 mm, de préférence comprise entre 5 et 15 mm.
- à l'étape i), la torche est déplacée pendant un premier intervalle de temps (T₁) inférieur à 15 s, de préférence compris entre 2 et 8 s.
- à l'étape ii), la torche est déplacée pendant un deuxième intervalle de temps (T₂) inférieur à 30 s, de préférence compris entre 2 et 12 s.

Par ailleurs, l'invention porte également sur une installation de coupage plasma telle que définie dans la revendication 14.

L'invention va être mieux comprise grâce à la description détaillée suivante faite en références aux figures annexées parmi lesquelles :
- la Figure 1 illustre une pièce métallique à couper pendant la phase de perçage,
- la Figure 2 schématise l'évolution dans le temps des paramètres d'un procédé de coupage par plasma d'arc selon un mode de réalisation de l'invention,
- la Figure 3 schématise l'évolution du positionnement vertical de la torche à plasma d'arc au cours d'un procédé de coupage mis en oeuvre selon un mode particulier de réalisation de l'invention, et
- les Figures 4a, 4b, 4c schématisent un procédé de coupage par plasma d'arc selon différents modes de réalisation particuliers de l'invention.

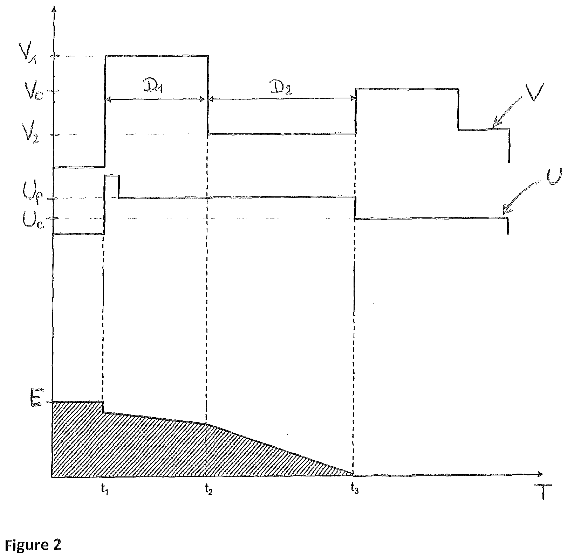

La Figure 2 schématise l'évolution dans le temps T, à partir du transfert de l'arc en t₁, des principaux paramètres d'un procédé de coupage par plasma d'arc mis en oeuvre selon un mode de réalisation de l'invention. Sont ainsi représentées les consignes données en termes de tension d'arc U, de vitesse V et de distance D de déplacement translatif de la torche au-dessus de la surface supérieure de la pièce, i. e. dans un plan parallèle à ladite surface. L'évolution de l'épaisseur de la pièce y est aussi représentée afin de visualiser le début (épaisseur E maximale en t₁) et la fin (épaisseur nulle en t₃) du perçage de la pièce.

A noter que dans le cadre de l'invention, le transfert de l'arc ainsi qui les étapes précédant ce transfert, en particulier l'amorçage de l'arc, peuvent être mis en oeuvre selon les techniques habituelles connues.

Ainsi, une torche de coupage à plasma d'arc comprend habituellement une électrode reliée à la borne négative d'un générateur de courant électrique, et une tuyère amont reliée à la borne positive du générateur via une impédance, généralement de quelques Ohms. La torche peut éventuellement comprendre une tuyère aval agencée en aval de la tuyère amont, les termes « amont » et « aval » se rapportant à la direction d'écoulement des fluides à travers le torche.

De façon connue, on utilise un porte-outil numérique, de préférence géré par un contrôleur de hauteur, pour bouger la torche verticalement selon son axe de symétrie A en approchement ou en éloignement par rapport à la tôle à couper qui est habituellement située sur des moyens supports de pièce, telle une table-support ou analogue.

En général, lorsque l'ordre de coupage d'une pièce est envoyé par un opérateur à l'alimentation électrique via l'IHM (Interface Homme Machine) de l'installation de coupage, la torche descend jusqu'à ce que son extrémité basse, c'est-à-dire l'extrémité basse de la tuyère amont ou de la tuyère aval selon le type de torche utilisé, rencontre la tôle. Ceci permet, grâce à des codeurs, de connaître la position, i.e. la distance de la torche par rapport à la référence que constitue la surface supérieure de la tôle.

En effet, lorsque la tuyère se trouve au contact de la surface supérieure de la pièce, un contact électrique s'établit alors entre la tuyère aval et la pièce. Un courant électrique passant par la tôle et la tuyère aval est détecté (système de détection souvent inclus dans le générateur). Le contrôleur de hauteur, ou système de « palpage », reconnaît alors cette hauteur de pièce H₀ comme la surface supérieure de la pièce qui est alors la surface de référence (H₀=0 mm).

La torche remonte alors à une hauteur d'amorçage Hₐ prédéfinie, choisie notamment en fonction de l'intensité de courant utilisée, de l'épaisseur et de la nature (aciers doux, aciers inoxydables, aluminium, etc.) de la pièce.

Un ordre d'amorçage de l'arc est ensuite envoyé. Au cours de la phase d'amorçage, on alimente le volume compris entre la surface externe de l'électrode et la surface interne de la tuyère amont, formant la chambre d'arc, avec un gaz d'assistance.

A noter que par gaz d'assistance ou gaz plasmagène, on entend tout gaz distribué dans la chambre d'arc. Selon l'étape du procédé de coupage par plasma d'arc considérée, le gaz d'assistance peut servir à amorcer l'arc pilote ou bien à opérer le perçage et la coupe de la pièce une fois l'arc transféré. De préférence, le type de gaz d'assistance est modifié selon que l'on se trouve en phase d'amorçage ou en phase de perçage/coupe.

Lorsque la torche comprend une tuyère aval agencée en aval de la tuyère amont, on parle de fluide ou gaz de protection pour désigner le fluide distribué dans le volume compris entre la surface externe de la tuyère amont et la surface interne de la tuyère aval.

Le plus souvent, un arc électrique est amorcé grâce à l'application d'une tension électrique continue, typiquement de l'ordre de 500 V, correspondant à la tension à vide du générateur, à laquelle est superposé un potentiel électrique alternatif haute tension (de l'ordre de 10 kV) en haute fréquence (de l'ordre de 10 kHz) entre l'électrode et la tuyère amont. Il se forme alors un arc électrique entre l'électrode et la tuyère amont, appelé arc pilote.

L'amorçage de l'arc pilote est avantageusement opéré avec passage rapide du courant d'une intensité nulle à une intensité d'arc pilote I₀ donnée, typiquement de l'ordre de 10 à 30 A. Le transfert de l'arc pilote est opéré avec passage du courant d'une intensité d'arc pilote I₀ donnée, à une intensité de coupe I_{c} donnée, par exemple de l'ordre de 15 à 900 A, avec I_{c}>I₀. L'augmentation du courant de I₀ à I_{c} a lieu de préférence progressivement, sur une durée typique de 100 à 400 ms. L'intensité I_{c} est ensuite maintenue pendant la durée de la coupe.

Dans le cadre du procédé de l'invention, l'arc pilote est amorcé préférentiellement dans un gaz d'assistance non oxydant, dans ce cas aussi appelé gaz d'assistance pilote, de préférence un gaz inerte comme l'argon ou l'azote ou bien un gaz tel que l'air. Le choix d'un gaz non-oxydant, tel l'argon, est préféré pour deux critères principaux, à savoir :
- il ne nécessite qu'une faible énergie pour amorcer un arc. Par exemple, des essais effectués dans un environnement contrôlé ont montré que, dans les mêmes conditions (en particulier pression du gaz et configuration des électrodes identiques), l'oxygène utilisé comme gaz d'amorçage nécessite une tension de l'ordre d'au moins 4 kV, alors que l'argon nécessite moins de 2 kV. Ceci a pour effet de fiabiliser le système de coupage car il y a une réduction importante du bruit électromagnétique qui est rayonné et/ou conduit dans l'électronique du système de découpe, limitant, de fait, les dysfonctionnements du système de découpe plasma. De plus, l'installation d'un tel système élimine le câblage coûteux et difficile à installer.
- il est chimiquement inerte. Ainsi, lorsque l'arc pilote est expulsé hors de la tuyère amont, l'usure de la sortie du canal de la tuyère est limitée. Par exemple, lors de l'utilisation d'un gaz réactif tel que l'oxygène ou l'air, l'action oxydante associée à l'énergie apportée par le pied d'arc provoque une érosion rapide au niveau de l'accrochage de l'arc pilote sur la tuyère.

En plus de l'argon, les gaz inertes comme le krypton, le xénon et leurs mélanges peuvent être utilisés. Utiliser de l'azote est moins recommandé, bien que possible, car une énergie plus importante est nécessaire pour amorcer l'arc et la quantité d'énergie importante apportée par le pied d'arc conduit à l'érosion de la sortie du canal de la tuyère amont (bien que l'érosion soit moins importante que celle engendrée par l'air).

L'alimentation de la torche en gaz d'assistance pilote est avantageusement maintenue jusqu'au transfert de l'arc électrique. Une fois l'arc pilote transféré, i. e. à partir de t₁ sur la Figure 2, on stoppe l'alimentation en gaz d'assistance pilote et on alimente la torche en gaz d'assistance de coupe. Dit autrement, on change la nature du gaz d'assistance alimentant la tuyère amont afin d'opérer les phases de perçage et de coupe proprement dites. Le gaz d'assistance de coupe est choisi de préférence parmi l'oxygène, l'azote, l'air, l'argon, l'hydrogène, un mélange argon/hydrogène, un mélange azote/hydrogène et mélange argon/azote/hydrogène.

Une fois l'arc amorcé entre la tuyère amont et l'électrode, le flux de gaz d'assistance pilote alimentant la chambre d'arc expulse rapidement l'arc jusqu'en sortie de canal de la tuyère amont et l'arc est immédiatement transféré à la pièce à découper (en t₁ sur la Figure 2). Il s'ensuit une augmentation de la distance torche/tôle provoquant une augmentation de la tension d'arc lors de la phase de perçage (Up sur la Figure 2), la tension Up étant typiquement d'au moins 210 V, de préférence de l'ordre de 230 V.

Le transfert de l'arc électrique a lieu à une hauteur Hₜ prédéfinie par rapport à la surface supérieure de la pièce, qui dépend également de l'intensité de courant utilisée, de l'épaisseur et de la nature (aciers doux, aciers inoxydables, aluminium, etc.) de la pièce à percer. La hauteur de transfert Hₜ est inférieure ou égale à la hauteur d'amorçage Hₐ.

Après détection du transfert de l'arc pilote de la tuyère amont vers la pièce métallique à couper, la tuyère amont est déconnectée du pôle positif du générateur, ce qui force l'arc à rester électriquement connecté à la pièce.

Le flux de gaz plasmagène traversant la chambre d'arc est ionisé dans l'arc électrique établi entre l'électrode et la pièce à découper. La constriction de l'arc, c'est-à-dire sa concentration sur une surface de section réduite, est obtenue lors du passage de l'arc dans le canal de la tuyère amont. Il s'ensuit l'éjection d'un jet de plasma d'arc par la tuyère amont dont la forte densité de puissance va permettre de fondre le matériau constitutif de la pièce à couper.

Débute alors (en t₁) la phase de perçage de la pièce au moyen du plasma d'arc produit en sortie de tuyère. Selon l'invention, le cycle de perçage de la pièce comprend la succession d'étapes décrites ci-dessous.

Une fois l'arc transféré, on opère un déplacement translatif de la torche par rapport à la pièce à couper à une première vitesse V₁ donnée supérieure à la vitesse de coupe V_{c} mise en oeuvre une fois la pièce percée.

A noter que par déplacement de la torche, on entend un déplacement de la torche relativement à la pièce qui peut avoir lieu par mouvement de la torche et/ou de la pièce l'une par rapport à l'autre.

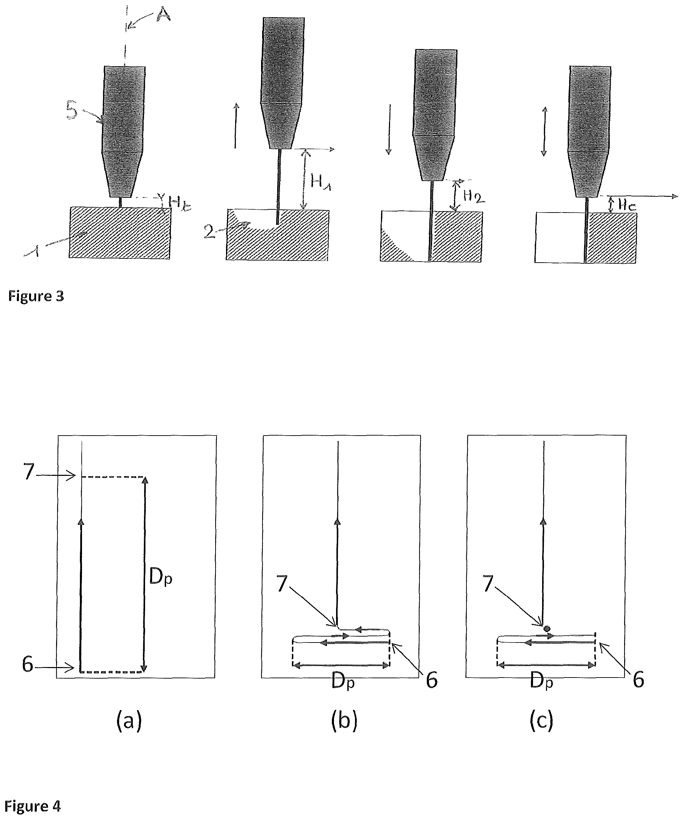

De plus, pour améliorer encore les conditions de perçage de la pièce et réduire les projections ainsi que leur impact négatif sur la torche, le procédé de l'invention met en oeuvre une gestion particulière des déplacements verticaux de la torche, i. e. selon son axe longitudinal A, telle qu'illustrée sur la Figure 3.

Ainsi, selon l'invention, après le transfert de l'arc vers la pièce à la hauteur Hₜ, on éloigne l'extrémité basse de la torche de la surface supérieure de la pièce jusqu'à une première hauteur H₁ donnée, avec H₁>Hₜ. Cet éloignement permet de mieux protéger l'extrémité basse de la torche des projections de métal liquide.

Plus précisément, le déplacement en hauteur et en éloignement de la torche par rapport à la pièce est effectué au cours de l'étape de déplacement translatif de la torche par rapport à la pièce à couper à la première vitesse V₁. En d'autres termes, le déplacement en hauteur et en éloignement de la torche est effectué simultanément au déplacement translatif de la torche, et ce pendant au moins une partie de l'étape de déplacement translatif. Avantageusement, l'éloignement de la torche débute dès le transfert de l'arc et juste avant le début du déplacement translatif de la torche par rapport à la pièce à couper à la première vitesse V₁. De préférence, le déplacement en hauteur de la torche est effectué pendant la totalité de l'étape de déplacement translatif de la torche, c'est-à-dire que la torche se déplace selon une rampe.

En fait, le déplacement de la torche à la vitesse V₁>V_{c} simultanément au déplacement en hauteur de la torche permet de creuser une cavité de perçage 2 telle que représentée sur la Figure 1 et d'induire un déséquilibre dans la pression exercée par le plasma au niveau de la surface supérieure du bain de métal liquide 3. Il s'ensuit l'éjection d'une gerbe de métal fondu, non plus quasi verticalement vers la torche comme dans l'art antérieur, mais dans une direction opposée au sens de déplacement de la torche et selon un angle d'inclinaison α par rapport à la surface supérieure de la pièce. Ceci limite grandement, voire élimine, les projections de métal liquide vers la torche.

L'angle d'inclinaison de la gerbe de métal liquide par rapport à la surface supérieure de la pièce est d'autant plus faible que la vitesse V₁ est grande. Ainsi, lors d'essais de coupe sur des pièces d'épaisseur comprise entre 80 et 120 mm, les inventeurs de la présente invention ont mis en évidence qu'une vitesse V₁ supérieure ou égale à 110 % de la vitesse de coupe V_{c}, de préférence supérieure ou égale à 120 % de la vitesse de coupe V_{c}, conduisait à des angles α inférieurs ou égaux à 45°, de préférence inférieurs ou égaux à 40°. Dans le cadre de l'invention, la torche est avantageusement déplacée à une première vitesse V₁ supérieure ou égale à 20 cm/min pour la découpe d'inox de 100 mm d'épaisseur à 600 A.

De préférence, la torche est déplacée à une première vitesse V₁ inférieure ou égale à 160 % de la vitesse de coupe V_{c}. En effet, si le déplacement de la torche est trop rapide, la quantité de matériau fondu est insuffisante et ne permet pas un perçage efficace de la pièce. En outre, la gerbe de métal fondu a tendance à venir se coucher sur la pièce et à y déposer des scories adhérentes.

Avantageusement, la torche est déplacée sur une distance D₁ inférieure à 50 mm, de préférence inférieure à 30 mm, de préférence encore comprise entre 15 et 25 mm, et/ou pendant un intervalle de temps T₁ (=t₂-t₁) inférieur à 15 s, de préférence compris entre 2 et 8 s. Le fait de déplacer la torche sur une distance D₁ la plus courte possible permet de minimiser la quantité de matière perdue suite au perçage de la pièce.

Selon l'invention, la cavité 2 créée à l'issue du déplacement à la vitesse V₁ n'est pas débouchante. Ainsi, on limite la profondeur de pièce pénétrée par le plasma d'arc, ce qui réduit la quantité de métal fondu projeté vers la torche.

Pour terminer totalement le perçage de la pièce, c'est-à-dire faire déboucher la cavité 2 au niveau de la surface inférieure de la pièce, on opère ensuite selon l'invention (à partir de t₂ sur la Figure 2) un déplacement translatif de la torche par rapport à la pièce métallique à couper à une deuxième vitesse V₂ donnée, avec V₂<V₁.

Ce déplacement à vitesse réduite permet de stabiliser l'arc électrique établi entre l'électrode et la pièce et d'augmenter l'énergie apportée à la pièce pour favoriser son perçage.

Selon l'invention, on opère au cours du déplacement de la torche à la deuxième vitesse V₂ un rapprochement de l'extrémité basse de la torche de la surface supérieure de la pièce jusqu'à une deuxième hauteur H₂ donnée, avec H₂<H₁. En d'autres termes, le déplacement en hauteur et en rapprochement de la torche est effectué simultanément au déplacement translatif de la torche, et ce pendant au moins une partie de l'étape de déplacement translatif.

En fait, le déplacement de la torche à la vitesse V₂<V₁ simultanément au déplacement en hauteur de la torche permet d'améliorer significativement les conditions de perçage sur forte épaisseur, notamment d'améliorer l'éjection du métal fondu. En effet, au cours de la phase de déplacement de la torche à la vitesse V₂, la cavité de perçage 2 est créée. Cette cavité est d'autant plus profonde que l'épaisseur de la pièce augmente. Si la torche est rapprochée de la pièce tout en étant maintenue immobile horizontalement. A partir d'une épaisseur de pièce de l'ordre de 40 mm, la quantité de métal fondu dans la cavité est trop grande et le métal fondu est projeté verticalement en direction de la torche.

Le mouvement d'avance de la torche à faible vitesse V₂ permet de créer un déséquilibre de pression à la surface du bain de métal fondu et d'incliner la gerbe de métal fondu dans une direction opposée au sens de déplacement de la torche, et le rapprochement de la torche permet en même temps d'augmenter la densité de puissance sur la pièce, de manière à creuser profondément la pièce et à finaliser le perçage.

Selon l'invention, la deuxième vitesse V₂ n'est pas nulle. La vitesse V₂ est de préférence inférieure à V_{c}, comme illustré sur la Figure 2.

De préférence, le rapprochement débute juste avant ou dès la réduction de la vitesse de déplacement de la torche de la première vitesse V₁ à la deuxième vitesse V₂ (en t₂). Avantageusement, les deux mouvements sont opérés de façon synchronisée.

Avantageusement, le rapprochement de la torche est effectué pendant la totalité de l'étape de déplacement translatif de la torche, c'est-à-dire que la torche se déplace selon une rampe.

De préférence, H₁ et H₂ sont telles que Hₜ<H₂<H₁, la hauteur H₁ étant avantageusement de l'ordre de l'épaisseur de la pièce à couper.

De préférence, la torche est déplacée à une deuxième vitesse V₂ inférieure ou égale à 5 cm/min.

Avantageusement, la torche est déplacée sur une deuxième distance D₂ inférieure à 30 mm, de préférence inférieure à 20 mm, de préférence comprise entre 5 et 15 mm, et/ou pendant un deuxième intervalle de temps T₂ (=t₃-t₂) inférieur à 30 s, de préférence compris entre 2 et 12 s.

Lorsque la tôle est percée, on opère un déplacement translatif de la torche par rapport à la pièce à couper à la vitesse de coupe V_{c}, afin de débuter (en t₃) le coupage de la pièce selon une trajectoire de coupe donnée.

De manière avantageuse, on opère en fin de trajectoire de coupe une réduction de la vitesse de déplacement translatif de la torche à une valeur inférieure à la vitesse de coupe V_{c}. Un exemple est illustré sur la Figure 2, la vitesse de déplacement translatif de la torche étant dans ce cas réduite après le temps t₃ à la valeur V₂ qui est inférieure à V_{c}. Ceci permet de terminer l'opération de coupe de façon plus efficace. En effet, pour des pièces de forte épaisseur, l'arc électrique a du retard en bas de la saignée de coupe et prend une forme oblique. Il s'ensuit que la coupe n'est pas complète et que la pièce coupée ne peut pas être détachée. La réduction de la vitesse en fin de coupe permet d'avoir un arc plus droit et ainsi de couper le bas de la pièce.

Une fois le perçage de la tôle étant achevé, la phase de coupage débute et la coupe de la pièce est opérée selon la trajectoire de coupe donnée, en maintenant la torche à une hauteur de coupe H_{c}, de préférence avec H_{c}<H₂ et/ou H_{c} <H₁. C'est de préférence à ce stade que la hauteur de la torche est maintenue automatiquement à la valeur de consigne grâce au système de palpage déjà décrit.

Dans le cadre de l'invention, les étapes de déplacement translatif de la torche par rapport à la pièce métallique à couper peuvent être opérées selon différentes directions, choisies en fonction du type de procédé mis en oeuvre, dont des exemples sont données en Figures 4a, 4b, 4c et détaillés ci-après. Sur ces Figures, le début du perçage a lieu au point indiqué par la flèche 6 et la fin du perçage, ou le début de la coupe, a lieu au point indiqué par la flèche 7.

La Figure 4a illustre ainsi la direction de déplacement de la torche au cours d'un procédé de coupage plasma dit « sec », i. e. avec distribution de gaz d'assistance par la tuyère amont et de gaz de protection par la tuyère aval. Pour une pièce en acier inoxydable, on utilise un mélange d'argon et de 35 % d'hydrogène (% en volume) en tant que gaz d'assistance et de l'azote en tant que gaz de protection. Pour une pièce en acier au carbone, on utilise de l'oxygène en tant que gaz d'assistance et de l'air en tant que gaz de protection.

Dans ce cas, les étapes de déplacement aux première et deuxième vitesses V₁, V₂ selon l'invention sont opérées dans une direction alignée avec la trajectoire de coupe, i.e. dans le prolongement de la trajectoire de coupe. La distance Dp est la distance nécessaire au creusement de la cavité de perçage et à la finalisation du perçage de la pièce (i.e. D₁+ D₂). Elle est avantageusement de 40 mm au plus afin de limiter la quantité de matière perdue au cours du perçage.

La Figure 4b illustre la direction de déplacement de la torche au cours d'un procédé de coupage plasma avec vortex d'eau en tant que fluide de protection et azote en tant que gaz d'assistance. Ce procédé est utilisé pour le coupage de pièces en acier inoxydable ou en aluminium d'épaisseurs inférieures ou égales à 50 mm. Dans ce cas, la pièce est immergée dans 100 mm d'eau environ, l'eau accélérant le refroidissement du métal en fusion et une protection de l'environnement contre le bruit, la poussière et la lumière générés par le procédé de découpe plasma. Il s'ensuit une resolidification plus rapide du métal éjecté de la cavité qui vient se déposer et former une sorte de barrière autour de la cavité. Ce procédé présente l'inconvénient de nécessiter une distance Dp de plus de 80 mm.

Pour réduire la perte de matière engendrée, la torche est positionnée avec un décalage latéral par rapport au point initial de la trajectoire de coupe et le déplacement translatif de la torche aux première et deuxième vitesses V₁, V₂ est opéré selon au moins une direction perpendiculaire à la trajectoire de coupe. Dans le cas illustré en Figure 4b, deux changements de direction sont opérés au cours des étapes de début et de fin de perçage.

La Figure 4c illustre la direction de déplacement de la torche au cours d'un procédé identique à celui de la Figure 4b, mais utilisé pour le coupage de pièces en acier inoxydable ou en aluminium d'épaisseurs supérieures 50 mm, de préférence inférieures à 80 mm. Dans ce cas, la forte épaisseur de la tôle accentue le phénomène de formation d'une barrière de matière resolidifiée autour de la cavité.

Pour éviter que la torche n'entre en contact avec cette matière, ce qui causerait le phénomène de double arc et la destruction du nez de la torche, on procède de la même façon que sur la Figure 4b, excepté que la torche est arrêtée (mouvement et arc électrique) pour permettre à un opérateur d'enlever la matière accumulée autour de la zone de perçage.

Ensuite, la torche est positionnée au point initial de la trajectoire de coupe, l'axe A de la torche étant avantageusement positionné près du bord de la cavité de perçage créée pour favoriser le transfert de l'arc au départ de la coupe. De préférence, le décalage entre l'axe A de la torche et le bord de la cavité est compris entre environ un tiers à la moitié de la largeur de la cavité.

Dans tous les cas, pour mettre en oeuvre le procédé de l'invention, on utilise préférentiellement une installation de coupage plasma comprenant un bâti-support posé ou fixé sur le sol, par exemple sur des rails, qui supporte une poutre mobile avec porte-outil sur laquelle est agencée une torche à plasma d'arc. La torche est elle-même agencée de manière mobile sur la poutre.

L'installation comprend en outre des moyens supports de pièce aptes à et conçus pour supporter une pièce à découper, telle une table située sous le bâti sur laquelle est couchée une tôle à couper.

Le déplacement de la torche sur la poutre et/ou de la poutre sur le bâti est obtenu grâce à des actionneurs motorisés ou tout autre dispositif analogue.

Des moyens de commande, tel un PC, une carte de contrôle, une commande numérique CN,... permettent de piloter des moyens de positionnement vertical de la torche, c'est-à-dire un porte-outil mobile verticalement (axe Z), de manière à déplacer la torche en éloignement ou en rapprochement par rapport aux moyens supports de pièce, c'est-à-dire la table support, et donc aussi à la surface supérieure de la tôle à couper.

Les moyens de commande permettent de piloter des moyens de positionnement en translation de la torche de manière à opérer un déplacement translatif de la torche par rapport aux moyens supports de pièce, et permettent en outre de piloter des moyens de positionnement vertical de la torche de manière à déplacer la torche en éloignement ou en rapprochement par rapport aux moyens supports de pièce.

L'installation comprend aussi de manière classique un générateur de courant avec système de refroidissement, un boitier de sélection des gaz, un extracteur de fumées, ainsi qu'une interface homme-machine ou IHM coopérant avec les moyens de commande et sur laquelle intervient un opérateur pour rentrer les consignes et autres informations nécessaires au bon déroulement de la coupe.

De manière connue en soi, l'amorçage de l'arc et la régulation des gaz se fait via un système d'amorçage/régulation classique positionné sur la poutre mobile du bâti.

Selon l'invention, les moyens de commande étant programmés pour commander, avant le début de la phase de coupage de la pièce, un déplacement translatif de la torche par rapport à la pièce métallique à couper à une première vitesse V₁ donnée et un déplacement translatif de la torche par rapport à la pièce métallique à couper à une deuxième vitesse V₂ donnée, avec V₂<V₁.

Selon un mode de réalisation particulièrement avantageux de l'invention, les moyens de commande sont en outre programmés pour commander, dès le déplacement translatif de la torche à la première vitesse V₁, un éloignement de l'extrémité basse de la torche de la surface supérieure de la pièce métallique à couper jusqu'à une première hauteur H₁ donnée, avec H₁>Hₜ et/ou, dès le déplacement translatif de la torche à la deuxième vitesse V₂, un rapprochement de l'extrémité basse de la torche de la surface supérieure de la pièce jusqu'à une deuxième hauteur H₂ donnée, avec H₂<H₁.

Les différentes étapes du procédé peuvent être mises en oeuvre manuellement ou automatiquement, grâce à un logiciel d'imbrication ou en modifiant les vitesses et/ou trajectoires de coupe dans le programme informatique contrôlant les déplacements de la torche.

Le procédé de l'invention est particulièrement adapté à la découpe des matériaux métalliques, en particulier les aciers, y compris les aciers inoxydables ou spéciaux, les aciers au carbone, ainsi que l'aluminium et ses alliages ou d'autres matériaux, tel le titane et ses alliages, le cuivre....

Avantageusement, la pièce métallique à couper a une épaisseur supérieure ou égale à 40 mm, de préférence supérieure ou égale à 50 mm, de préférence encore supérieure ou égale à 80 mm.

Le procédé selon l'invention permet ainsi, même pour les pièces de forte épaisseur, de percer les pièces en influant sur la direction d'éjection du métal fondu grâce à un déplacement rapide de la torche conduisant à une action pneumatique efficace du jet de plasma. Il permet en outre de réduire la surface de pièce nécessaire à la réalisation du perçage par rapport aux procédés de l'art antérieur.

## Revendications

1. Procédé de coupage d'une pièce métallique mettant en oeuvre une torche de coupage par plasma d'arc alimentée en gaz d'assistance, ledit procédé comprenant les étapes successives suivantes :
a) positionnement de l'extrémité basse de la torche à une hauteur de transfert (Hₜ) donnée par rapport à la surface supérieure de la pièce métallique à couper , transfert d'un arc électrique vers ladite pièce, et production d'un plasma d'arc par ionisation du gaz d'assistance au moyen de l'arc électrique transféré,
b) déplacement translatif de la torche par rapport à la pièce métallique à couper à une première vitesse (V₁) donnée, avec V₁>V_{c}, et début du perçage de ladite pièce au moyen du plasma d'arc produit à l'étape a), l'extrémité basse de la torche étant éloignée de la surface supérieure de la pièce métallique à couper jusqu'à une première hauteur (H₁) donnée, avec H₁>Hₜ,
d) déplacement translatif de la torche par rapport à la pièce métallique à couper à une vitesse de coupe (V_{c}) donnée, et début du coupage de ladite pièce selon une trajectoire de coupe donnée au moyen du plasma d'arc produit à l'étape a),
**caractérisé en ce que**, préalablement à l'étape d), ledit procédé comprend en outre l'étape suivante :
c) déplacement translatif de la torche par rapport à la pièce métallique à couper, c'est-à-dire dans un plan parallèle à la surface de ladite pièce, à une deuxième vitesse (V₂) non nulle donnée, avec V₂<V₁, et fin du perçage de ladite pièce, l'extrémité basse de la torche étant rapprochée de la surface supérieure de la pièce jusqu'à une deuxième hauteur (H₂) donnée, avec H₂<H₁, le déplacement en hauteur et en rapprochement de la torche étant effectué simultanément au déplacement translatif de la torche et pendant au moins une partie de l'étape de déplacement translatif.

2. Procédé selon la revendication précédente, **caractérisé en ce que** le rapprochement de l'extrémité basse de la torche débute dès la réduction de la vitesse de déplacement de la torche de la première vitesse V₁ à la deuxième vitesse V₂.

3. Procédé selon l'une des revendications précédentes, **caractérisé en ce que** le déplacement translatif de la torche par rapport à la pièce métallique à couper à la deuxième vitesse (V₂) et le rapprochement de l'extrémité basse de la torche de la surface supérieure de la pièce sont opérés de façon synchronisée.

4. Procédé selon l'une des revendications précédentes, **caractérisé en ce qu'**à l'étape i), la torche est déplacée à une première vitesse (V₁) supérieure ou égale à 110 % de la vitesse de coupe (V_{c}), de préférence supérieure ou égale à 120 % de la vitesse de coupe (V_{c}).

5. Procédé selon l'une des revendications précédentes, **caractérisé en ce qu'**à l'étape i), la torche est déplacée à une première vitesse (V₁) supérieure ou égale à 20 cm/min.

6. Procédé selon l'une des revendications précédentes, **caractérisé en ce qu'**à l'étape i), la torche est déplacée à une première vitesse (V₁) inférieure ou égale à 160 % de la vitesse de coupe (V_{c}).

7. Procédé selon l'une des revendications précédentes, **caractérisé en ce qu'**à l'étape ii), la torche est déplacée à une deuxième vitesse (V₂) inférieure ou égale à 5 cm/min.

8. Procédé selon l'une des revendications précédentes, **caractérisé en ce qu'**à l'étape i), la torche est déplacée sur une première distance (D₁) inférieure à 50 mm, de préférence inférieure à 30 mm, de préférence encore comprise entre 15 et 25 mm.

9. Procédé selon l'une des revendications précédentes, **caractérisé en ce qu'**à l'étape ii), la torche est déplacée sur une deuxième distance (D₂) inférieure à 30 mm, de préférence inférieure à 20 mm, de préférence comprise entre 5 et 15 mm.

10. Procédé selon l'une des revendications précédentes, **caractérisé en ce qu'**à l'étape i), la torche est déplacée pendant un premier intervalle de temps (T₁) inférieur à 15 s, de préférence compris entre 2 et 8 s.

11. Procédé selon l'une des revendications précédentes, **caractérisé en ce qu'**à l'étape ii), la torche est déplacée pendant un deuxième intervalle de temps (T₂) inférieur à 30 s, de préférence compris entre 2 et 12 s.

12. Procédé selon l'une des revendications précédentes, **caractérisé en ce que** la pièce métallique à couper a une épaisseur supérieure ou égale à 40 mm, de préférence supérieure ou égale à 50 mm, de préférence encore supérieure ou égale à 80 mm.

13. Procédé selon l'une des revendications précédentes, **caractérisé en ce qu'**il comprend en outre une étape d'extinction de l'arc électrique et de fin du coupage de la pièce, la vitesse de déplacement translatif de la torche étant préalablement réduite à une valeur inférieure à la vitesse de coupe V_{c}.

14. Installation de coupage plasma comprenant :
- un bâti-support avec une poutre mobile sur laquelle est agencée une torche à plasma d'arc alimentée, ladite torche étant elle-même agencée de manière mobile sur ladite poutre,
- au moins une source de gaz alimentant ladite torche en gaz d'assistance,
- des moyens supports de pièce aptes à et conçus pour supporter une pièce métallique à couper,
- des moyens de commande permettant de piloter des moyens de positionnement en translation de la torche de manière à opérer un déplacement translatif de la torche par rapport aux moyens supports de pièce, et permettant en outre de piloter des moyens de positionnement vertical de la torche de manière à déplacer la torche en éloignement ou en rapprochement par rapport aux moyens supports de pièce, les moyens de commande étant programmés pour commander :
a) un positionnement de l'extrémité basse de la torche à une hauteur de transfert (Hₜ) donnée par rapport à la surface supérieure de la pièce métallique à couper, de manière à opérer un transfert d'un arc électrique vers ladite pièce et à produire un plasma d'arc par ionisation du gaz d'assistance au moyen de l'arc électrique transféré,
b) un déplacement translatif de la torche par rapport à la pièce métallique à couper à une première vitesse (V₁) donnée, de manière à débuter le perçage de ladite pièce au moyen de l'arc électrique transféré à l'étape a), et un éloignement de l'extrémité basse de la torche de la surface supérieure de la pièce métallique à couper jusqu'à une première hauteur (H₁) donnée, avec H₁>Hₜ,
c) un déplacement translatif de la torche par rapport à la pièce métallique à couper, c'est-à-dire dans un plan parallèle à la surface de ladite pièce, à une deuxième vitesse (V₂) non nulle donnée, avec V₂<V₁ de manière à terminer le perçage de ladite pièce, et
d) un déplacement translatif de la torche par rapport à la pièce métallique à couper à une vitesse de coupe (V_{c}) donnée, de manière à débuter le coupage de ladite pièce selon une trajectoire de coupe donnée,
et les moyens de commande sont en outre programmés pour commander, à l'étape c), un rapprochement de l'extrémité basse de la torche de la surface supérieure de la pièce jusqu'à une deuxième hauteur (H₂) donnée, avec H₂<H₁, et ce simultanément au déplacement translatif de la torche et pendant au moins une partie de l'étape de déplacement translatif.

## Patentansprüche

1. Verfahren zum Schneiden eines Metallteils, das einen Lichtbogen-Plasmaschneidbrenner anwendet, der mit Hilfsgas versorgt wird, wobei das Verfahren die folgenden aufeinander folgenden Schritte umfasst:
a) Positionieren des unteren Endes des Brenners auf eine gegebene Übertragungshöhe (Hₜ) im Verhältnis zur oberen Fläche des zu schneidenden Metallteils, Übertragung eines Lichtbogens auf das Teil, und Erzeugen eines Lichtbogenplasmas durch Ionisieren des Hilfsgases anhand des übertragenen Lichtbogens,
b) Translatorische Bewegung des Brenners im Verhältnis zu dem zu schneidenden Metallteil mit einer ersten gegebenen Geschwindigkeit (V₁), mit V₁ > V_{c}, und Start des Bohrens des Teils anhand des im Schritt a) erzeugten Lichtbogenplasmas, wobei das untere Ende des Brenners bis auf eine gegebene erste Höhe (H₁) von der oberen Fläche des zu schneidenden Metallteils entfernt ist, mit H₁ > Hₜ,
d) Translatorische Bewegung des Brenners im Verhältnis zu dem zu schneidenden Metallteil mit einer gegebenen Schneidgeschwindigkeit (V_{c}), und Start des Schneidens des Teils entlang eines gegebenen Schneidwegs anhand des im Schritt a) erzeugten Lichtbogenplasmas,
**dadurch gekennzeichnet, dass** das Verfahren vor dem Schritt d) darüber hinaus den folgenden Schritt umfasst:
c) Translatorische Bewegung des Brenners im Verhältnis zu dem zu schneidenden Metallteil, das heißt auf einer Ebene parallel zur Oberfläche des Teils, mit einer gegebenen zweiten Geschwindigkeit (V₂) ungleich Null,
mit V₂ < V₁ und Ende des Bohrens des Teils, wobei das untere Ende des Brenners der oberen Fläche des Teils bis auf eine gegebene zweite Höhe (H₂) angenähert wird, mit H₂ < H₁, wobei die Bewegung in die Höhe und zur Annäherung des Brenners zur selben Zeit mit der translatorischen Bewegung des Brenners und während zumindest eines Teils des Schritts der translatorischen Bewegung erfolgt.

2. Verfahren nach dem vorhergehenden Anspruch, **dadurch gekennzeichnet, dass** die Annäherung des unteren Endes des Brenners sofort ab der Verringerung der Fahrgeschwindigkeit des Brenners von der ersten Geschwindigkeit V₁ auf die zweite Geschwindigkeit V₂ beginnt.

3. Verfahren nach einem der vorhergehenden Ansprüche, **dadurch gekennzeichnet, dass** die translatorische Bewegung des Brenners im Verhältnis zu dem zu schneidenden Metallteil mit der zweiten Geschwindigkeit (V₂) und die Annäherung des unteren Endes des Brenners an die obere Fläche des Teils synchron durchgeführt werden.

4. Verfahren nach einem der vorhergehenden Ansprüche, **dadurch gekennzeichnet, dass** der Brenner im Schritt i) mit einer ersten Geschwindigkeit (V₁) größer oder gleich 110% der Schneidgeschwindigkeit (V_{c}), vorzugsweise größer oder gleich 120% der Schneidgeschwindigkeit (V_{c}) bewegt wird.

5. Verfahren nach einem der vorhergehenden Ansprüche, **dadurch gekennzeichnet, dass** der Brenner im Schritt i) mit einer ersten Geschwindigkeit (V₁) größer oder gleich 20 cm/Min. bewegt wird.

6. Verfahren nach einem der vorhergehenden Ansprüche, **dadurch gekennzeichnet, dass** der Brenner im Schritt i) mit einer ersten Geschwindigkeit (V₁) kleiner oder gleich 160% der Schneidgeschwindigkeit (V_{c}) bewegt wird.

7. Verfahren nach einem der vorhergehenden Ansprüche, **dadurch gekennzeichnet, dass** der Brenner im Schritt ii) mit einer zweiten Geschwindigkeit (V₂) kleiner oder gleich 5 cm/Min. bewegt wird.

8. Verfahren nach einem der vorhergehenden Ansprüche, **dadurch gekennzeichnet, dass** der Brenner im Schritt i) über eine erste Distanz (D₁) kleiner als 50 mm, vorzugsweise kleiner als 30 mm, noch besser zwischen 15 und 25 mm bewegt wird.

9. Verfahren nach einem der vorhergehenden Ansprüche, **dadurch gekennzeichnet, dass** der Brenner im Schritt ii) über eine zweite Distanz (D₂) kleiner als 30 mm, vorzugsweise kleiner als 20 mm, noch besser zwischen 5 und 15 mm bewegt wird.

10. Verfahren nach einem der vorhergehenden Ansprüche, **dadurch gekennzeichnet, dass** der Brenner im Schritt i) während eines ersten Zeitintervalls (T₁) kleiner als 15 s, vorzugsweise zwischen 2 und 8 s bewegt wird.

11. Verfahren nach einem der vorhergehenden Ansprüche, **dadurch gekennzeichnet, dass** der Brenner im Schritt ii) während eines zweiten Zeitintervalls (T₂) kleiner als 30 s, vorzugsweise zwischen 2 und 12 s bewegt wird.

12. Verfahren nach einem der vorhergehenden Ansprüche, **dadurch gekennzeichnet, dass** das zu schneidende Metallteil eine Dicke von größer oder gleich 40 mm, vorzugsweise größer oder gleich 50 mm, noch besser größer oder gleich 80 mm aufweist.

13. Verfahren nach einem der vorhergehenden Ansprüche, **dadurch gekennzeichnet, dass** es darüber hinaus einen Schritt zum Löschen des Lichtbogens und des Endes des Schneidens des Teils umfasst, wobei die Geschwindigkeit der translatorischen Bewegung des Brenners zuvor auf einen Wert von unter der Schneidgeschwindigkeit V_{c} gesenkt wird.

14. Plasmaschneidinstallation, Folgendes umfassend:
- einen Tragrahmen mit einem beweglichen Balken, auf dem ein versorgter Lichtbogen-Plasmabrenner angeordnet ist, wobei der Brenner selbst beweglich auf dem Balken angeordnet ist,
- zumindest eine Gasquelle zur Versorgung des Brenners mit Hilfsgas,
- Teil-Haltemittel, die imstande und konzipiert sind, um ein zu schneidendes Metallteil zu halten,
- Steuermittel, die das Steuern der Mittel zur translatorischen Positionierung des Brenners ermöglichen, um eine translatorische Bewegung des Brenners im Verhältnis zu den Teil-Haltemitteln durchzuführen und um darüber hinaus die Steuerung der Mittel zur vertikalen Positionierung des Brenners zu ermöglichen, um den Brenner in die Entfernungs- und Annäherungsrichtung im Verhältnis zu den Teil-Haltemitteln zu bewegen, wobei die Steuermittel programmiert sind, um Folgendes anzusteuern:
a) eine Positionierung des unteren Endes des Brenners auf eine gegebene Übertragungshöhe (Hₜ) im Verhältnis zur oberen Fläche des zu schneidenden Metallteils, um eine Übertragung eines Lichtbogens auf das Teil durchzuführen, und um ein Lichtbogenplasma durch Ionisieren des Hilfsgases anhand des übertragenen Lichtbogens zu erzeugen,
b) eine translatorische Bewegung des Brenners im Verhältnis zu dem zu schneidenden Metallteil mit einer ersten gegebenen Geschwindigkeit (V₁), um das Bohren des Teils anhand des im Schritt a) übertragenen Lichtbogens zu starten, sowie eine Entfernung des unteren Endes des Brenners von der oberen Fläche des zu schneidenden Metallteils bis auf eine erste gegebene Höhe (H₁), mit H₁ > Hₜ,
c) eine translatorische Bewegung des Brenners im Verhältnis zu dem zu schneidenden Metallteil, das heißt auf einer Ebene parallel zur Oberfläche des Teils, mit einer gegebenen zweiten Geschwindigkeit (V₂) ungleich Null, mit V₂ < V₁, um das Bohren des Teils zu beenden, und
d) eine translatorische Bewegung des Brenners im Verhältnis zu dem zu schneidenden Metallteil mit einer gegebenen Schneidgeschwindigkeit (V_{c}), um das Schneiden des Teils entlang eines gegebenen Schneidwegs zu starten,
und die Steuermittel darüber hinaus programmiert sind, um im Schritt c) eine Annäherung des unteren Endes des Brenners an die obere Fläche des Teils bis auf eine gegebene zweite Höhe (H₂) anzusteuern, mit H₂ < H₁, und dies zur selben Zeit mit der translatorischen Bewegung des Brenners und während zumindest eines Teils des Schritts der translatorischen Bewegung.

## Claims

1. Method of cutting a metal component, implementing a plasma cutting torch for an arc supplied with assistance gas, said method comprising the following successive steps:
a) positioning the lower end of the torch at a given transfer height (H₁), in relation to the upper surface of the metal component to be cut, the transfer of an electric arc towards said component, and the production of a plasma arc by ionisation of the assistance gas by means of the transferred electric arc,
b) translation movement of the torch in relation to the metal component to be cut at a given first speed (V₁), with V₁>V_{c}, and the start of the piercing of said component by means of the plasma from the arc produced in step a), the lower end of the torch being separated from the upper surface of the metal component to be cut up to the given first height (H₁), with H₁>Hₜ,
d) translation movement of the torch in relation to the metal component to be cut at a given first cutting speed (V_{c}), and the start of the cutting of the said component according to a given cutting trajectory, by means of the plasma from the arc produced in step a),
**characterised in that**, previously to step d), said method furthermore comprises the following step:
c) translation movement of the torch in relation to the metal component to be cut, in other words, in a parallel plane to the surface of the said component, at a given non-zero second speed (V₂),
with V₂<V₁, and the end of the piercing of the said component, the lower end of the torch being aligned with the upper surface of the component, up to a given second height (H₂), with H₂<H₁, the height movement and movement bringing the torch closer being carried out simultaneously to the translation movement of the torch, and during at least one part of the translation movement step.

2. Method according to the previous claim, **characterised in that** the alignment of the lower end of the torch starts from the reduction of speed of the movement of the torch from the first speed V₁ to the second speed V₂.

3. Method according to one of the previous claims, **characterised in that** the translation movement of the torch in relation to the metal component to be cut at the second speed (V₂) and the alignment of the lower end of the torch of the upper surface of the component are carried out in a synchronised way.

4. Method according to one of the previous claims, characterised that in step i), the torch is moved at a first speed (V₁), more than or equal to 110% of the cutting speed (V_{c}), preferably more than or equal to 120% of the cutting speed (V_{c}).

5. Method according to one of the previous claims, characterised that in step i), the torch is moved at a first speed (V₁), more than or equal to 20cm/min.

6. Method according to one of the previous claims, characterised that in step i), the torch is moved at a first speed (V₁), less than or equal to 160% of the cutting speed (V_{c}).

7. Method according to one of the previous claims, characterised that in step ii), the torch is moved at a second speed (V₂), less than or equal to 5cm/min.

8. Method according to one of the previous claims, characterised that in step i), the torch is moved over a first distance (D₁), less than 50mm, preferably less than 30mm, preferably still between 15 and 25mm.

9. Method according to one of the previous claims, characterised that in step ii), the torch is moved over a second distance (D₂), less than 30mm, preferably less than 20mm, preferably between 5 and 15mm.

10. Method according to one of the previous claims, characterised that in step i), the torch is moved for a first time interval (T₁), less than 15s, preferably between 2 and 8s.

11. Method according to one of the previous claims, characterised that in step ii), the torch is moved for a second time interval (T₂), less than 30s, preferably between 2 and 12s.

12. Method according to one of the previous claims, **characterised in that** the metal component to be cut has a thickness of more than or equal to 40mm, preferably more than or equal to 50mm, preferably still more than or equal to 80mm.

13. Method according to one of the previous claims, **characterised in that** it additionally includes a step of extinguishing the electric arc and the end of cutting the component, the transferring movement speed of the torch previously being reduced to a value less than the cutting speed V_{c}.

14. Plasma-cutting installation, comprising:
- a support frame with a mobile beam, whereon a supplied arc plasma torch is disposed, said torch itself being disposed in a mobile way on the said beam,
- at least one gas source supplying said torch with assistance gas,
- component support means, able to and designed to support a metal component to be cut,
- control means enabling the management of positioning means in translating the torch in a way to carry out a translation movement of the torch in relation to the component support means, and furthermore enabling the management of means to vertically position the torch in a way to move the torch in separation or alignment, in relation to the component support means, the control means being programmed to control:
a) a positioning of the lower end of the torch at a given transfer height (H₁), in relation to the upper surface of the metal component to be cut, in a way to carry out a transfer of an electric arc to the said component, and to produce arc plasma by ionising the assistance gas by means of the transferred electric arc,
b) a translation movement of the torch in relation to the metal component to be cut at a given first speed (V₁), in a way to start the piercing of the said component by means of the electric arc transferred in step a), and a separation from the lower end of the torch of the upper surface of the metal component to be cut, up to a given first height (H₁), with H₁>Hₜ,
c) a translation movement of the torch in relation to the metal component to be cut, in other words, in a parallel plane to the surface of the said component, at a given non-zero second speed (V₂), with V₂<V₁ in a way to end the piercing of the said component, and
d) a translation movement of the torch in relation to the metal component to be cut at a given cutting speed (V_{c}), in a way to start the cutting of the said component, according to a given cutting trajectory,
and the control means are additionally programmed to control, in step c), an alignment of the lower end of the torch of the upper surface of the component, up to a given second height (H₂), with H₂<H₁, and this simultaneously to the translation movement of the torch, and during at least one part of the translation movement step.
